# EUROPEAN PATENT SPECIFICATION

(11) **EP 4 300 318 B1**
(45) Date of publication and mention of the grant of the patent: **30.07.2025**
(21) Application number: 23180280.2
(22) Date of filing: 20.06.2023
(51) Int. Cl.: G06F 13/38, G06F 13/40, H04L 12/10, H04L 12/40, G06F 13/42, G06F 1/26, G06F 13/10, H02M 1/44, G05B 19/406, G05B 9/02, H02P 29/00, H02M 1/12

(54) **MOTOR DRIVE WITH DUAL-ROLE USB PORT AND METHODS THEREOF**
MOTORANTRIEB MIT DOPPELROLLEN-USB-PORT UND VERFAHREN DAFÜR
ENTRAÎNEMENT DE MOTEUR AVEC PORT USB À DOUBLE RÔLE ET PROCÉDÉS ASSOCIÉS

(30) Priority: 30.06.2022 US 202263357184 P; 25.07.2022 US 202217872991
(43) Date of publication of application: 03.01.2024
(73) Proprietor: Rockwell Automation Technologies, Inc., Mayfield Heights, OH 44124 (US)
(72) Inventor: Riley, Joseph D., Mayfield Heights, OH, 44124 (US); Brown, Brian P., Mayfield Heights, OH, 44124 (US); Weiss, Bruce W., Mayfield Heights, OH, 44124 (US); Braun, Scott D., Mayfield Heights, OH, 44124 (US)
(74) Representative: Grünecker Patent- und Rechtsanwälte PartG mbB

(56) References cited:
- EP-A1- 3 051 382
- WO-A1-2014/116761
- CN-Y- 201 137 575
- - UMC100: "Technical Description", 1 July 2015 (2015-07-01), pages 1 - 165, XP055818563, Retrieved from the Internet <URL:https://library.e.abb.com/public/00c5e886fce94931a3a2f18627421813/2CDC135032D0203.pdf> [retrieved on 20210628]

## Description

### BACKGROUND INFORMATION

The subject matter disclosed within relates generally to power modules such as motor drives. In particular, the subject matter relates to a motor drive that provides a USB dual-role port, allowing the motor drive to act as a USB host or USB device depending on the type of component to which is it connected.

For example, motor drives often include hardware and software components that provide the motor drive with a high degree of versatility. Before putting the motor drive into service, it may be custom programmed with desired operating characteristics. Furthermore, during its lifetime, the motor drive may be updated or re-programmed several times. Such programming can be accomplished via an external human interface module (HIM) or personal computer. As such, a motor drive can support a first connection to an HIM, with this type of connection providing a means for the drive to supply power to the HIM as well as for bi-directional data flow between the drive and the HIM. Additionally, a motor drive can support a second connection to a personal computer, with this type of connection providing a means for the personal computer to supply power to the drive as well as for bi-directional data flow between the drive and the computer.
WO 2014/116761 A1 relates to diagnostic and/or control techniques for variable frequency drives. The variable frequency drive may be controlled by a controller that may conduct one or more tests or evaluations. The tests or evaluations may include determining whether a switching device in the variable frequency drive is open-circuited, short-circuited, or operating normally. The tests may include determining whether current provided at an inverter output of the variable frequency drive is within a predetermined range. An exemplary embodiment evaluates the drive for a short circuit condition, an open circuit condition, and a sensor error or failure condition, controls operation of the drive based upon these one or more evaluations, may abort operation of the drive based upon one or more evaluations, and may set a fault code indicative of the type of error encountered.
EP 3 051 382 A1 relates to an electronic device having a universal serial bus (USB) type-C interface and a power management method thereof. In the method, when the electronic device is connected with another electronic device through a USB cable, the electronic device recognizes a USB port through a configuration channel. Also, the electronic device recognizes a connection direction of the USB cable and receives power information from the other electronic device through the configuration channel. Then, based on the received power information, the electronic device determines whether to enter a downstream facing port (DFP) mode or an upstream facing port (UFP) mode.
UMC100: "Technical Description", retrievable from the internet URL: https://library.e.abb.com/public/00c5e886fce94931a3a2f18627421813/2CDC135032D0203.pdf is a technical manual for UMC100.3. The Universal Motor Controller (UMC) is an intelligent motor controller for 3-phase AC induction motors combining the two classical functions of motor protection and motor management in a single device plus offering diagnostic and fieldbus communication. The device functions can be adjusted in a wide range to cover the needs of different industries. UMC100 is a further development of the UMC22.
CN 201 137 575 Y relates to a USB fan, in particular to a USB fan with an anti-motor interference system. The utility model uses the principle that a diode is cut off by the reverse current and is conducted by the positive current. A USB interface of a computer is connected, two power wires which supply direct current supply are reversely intervened into a diode, and then the power wires are connected with a motor and the fan.

### BRIEF DESCRIPTION

It is the object of the present invention to improve prior art systems. This object is solved by the subject matter of the independent claims. Preferred embodiments are defined by the dependent claims.

The foregoing and other aspects and advantages of the present disclosure will appear from the following description. In the description, reference is made to the accompanying drawings which form a part hereof, and in which there is shown by way of illustrations one or more embodiments of the present disclosure. Such embodiments do not necessarily represent the full scope of the present disclosure, however, and reference is made therefore to the claims and herein for interpreting the scope of the present disclosure.

### BRIEF DESCRIPTION OF DRAWINGS

The present disclosure will be better understood and features, aspects and advantages other than those set forth above will become apparent when consideration is given to the following detailed description thereof. Such detailed description makes reference to the following drawings.
FIG. 1 is a schematic view of a motor drive and an external device, according to some embodiments.
FIG. 2 is a schematic view of a motor drive directly connected to a Human Interface Module (HIM).
FIG. 3 is a schematic view of a motor drive connected to an HIM via a connector cable.
FIG. 4 is a schematic view of a motor drive connected to a personal computer via a connector cable
FIG. 5 is a schematic view of a motor drive connected to a personal computer via an isolating connector cable.
FIG. 6 illustrates a block diagram of control circuitry of a motor drive including a communications port, according to some embodiments.
FIG. 7 is a schematic illustration of connector pins of a USB 3.1 connection port according to some embodiments.
FIG. 8 is a flowchart of a method according to some embodiments.

### DETAILED DESCRIPTION

Before any embodiments of the invention are explained in detail, it is to be understood that the embodiments are not limited in its application to the details of construction and the arrangement of components set forth in the following description or illustrated in the following drawings. Aspects of the present disclosure are capable of other embodiments and of being practiced or of being carried out in various ways. Also, it is to be understood that the phraseology and terminology used herein is for the purpose of description and should not be regarded as limiting.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the present disclosure. Various modifications to the illustrated embodiments will be readily apparent to those skilled in the art, and the generic principles herein can be applied to other embodiments and applications without departing from embodiments of the present disclosure. Thus, embodiments of the present disclosure are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the present disclosure. Skilled artisans will recognize the examples provided herein have many useful alternatives and fall within the scope of embodiments of the present disclosure.

Disclosed herein are systems and methods for a motor drive including a dual-role universal serial bus (USB) port that supports dual-role data and/or dual-role power such that: (1) when a Human Interface Module (HIM) is connected to the dual-role USB port, the motor drive functions as a USB host providing power to the HIM and controlling data flow to and from the HIM; and (2) when a computer is connected to the dual-role USB port, the motor drive functions as a USB device receiving power from the computer and allowing the computer to control data flow to and from the motor drive. Additionally, in some embodiments, the motor drive can take one or more mitigation actions to prevent common mode noise between the motor drive and a connected computer when the motor drive is running.

For example, some current drives support connections with external HIMs via proprietary cables and protocols having data communication rates that require significant time for updates and may be too slow to provide a satisfactory customer experience. Additionally, some current drives may support connection to a personal computer for "mains-free programming" (that is, when DC bus power of the drive is not present), but do so by requiring the power structure of the motor drive to be physically disconnected from the control structure. On the other hand, embodiments described herein use a USB dual-role port as a single, standard connection port for both HIM and personal computer connections without requiring drive power structures to be disconnected. In this manner, the motor drive can act as a USB dual-role power (DRP) device, providing the ability to negotiate power flow such that the motor drive operates as a source to provide power to an HIM or operates as a sink to receive power from a computer. Furthermore, the motor drive can act as a USB dual-role data (DRD) device, providing high-speed data communication rates with the ability to negotiate control of data flow such that the USB port operates as a downstream facing port (DFP), where the motor drive acts as a USB host, when connected to an HIM and operates as an upstream facing port (UFP), where the motor drive acts as a USB device, when connected to a computer.

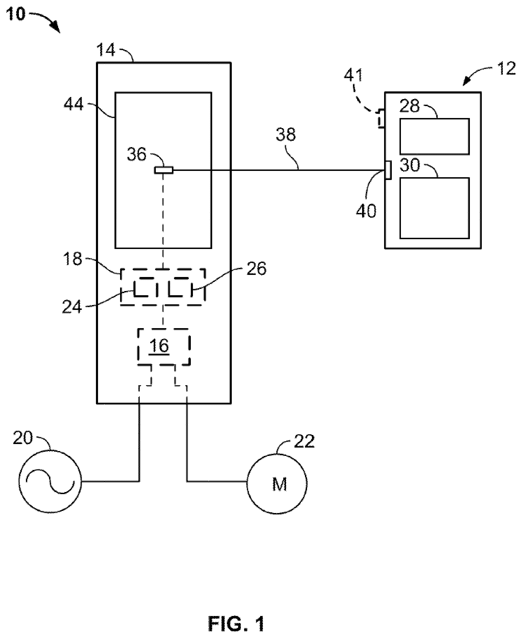

Accordingly, FIG. 1 is a schematic view of a motor drive 10 and an external device 12, according to some embodiments. The motor drive 10 can include an outer housing 14 that houses power and control circuitry such as, for example, a power module 16 and a control module 18. The motor drive 10 can be connected to a power source 20 and configured to drive a motor 22. More specifically, in some embodiments, the motor drive 10 is adapted to receive three-phase power from the power source 20 and convert this fixed frequency input power to a controlled frequency output power to be applied to the motor 22, as controlled by the power and control modules 16, 18. In some embodiments, the motor drive 10 can be a PowerFlex drive manufactured by Rockwell Automation.

According to some embodiments, the control module 18 is programmed according to a specific programming configuration desired for a particular application. That is, operating characteristics of the motor drive 10 may be determined, in part, by the programming configuration of the motor drive 10. For example, the programming configuration may include any data, software, or firmware that is used to define the performance of the motor drive 10, the appearance or performance of any user interfaces of the motor drive 10, or the performance or user interface appearance of any peripheral devices communicatively coupled to the motor drive 10. The programming configuration may include operating parameters, parameter customization data, and firmware for the motor drive 10 or any peripherals. Often, certain aspects of the programming configuration will be determined by a manufacturer, OEM, system integrator, or other service provider and transferred to the motor drive 10 from an external source. Furthermore, periodic updates of the programming configurations or operational codes may take place, such as when a motor drive 10 is replaced, the motor drive 10 application is altered, or firmware is updated. Accordingly, programming of the control module 18 may be accomplished through software configuration or firmware code that is loaded onto an internal computer-readable memory 24 of the control module 18 and accessed and/or executed by a microprocessor 26 (and/or one or more other processing devices, not shown) of the control module 18.

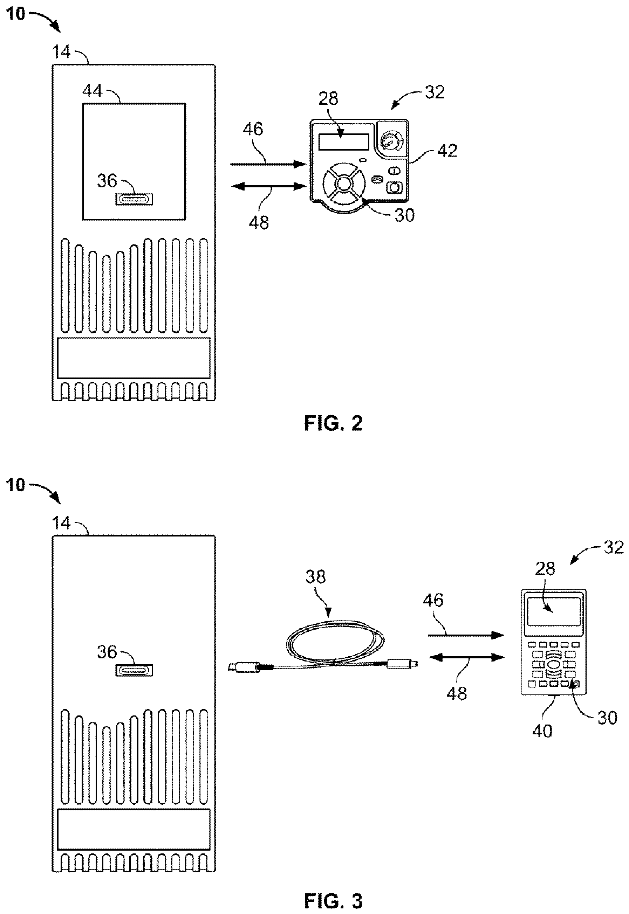

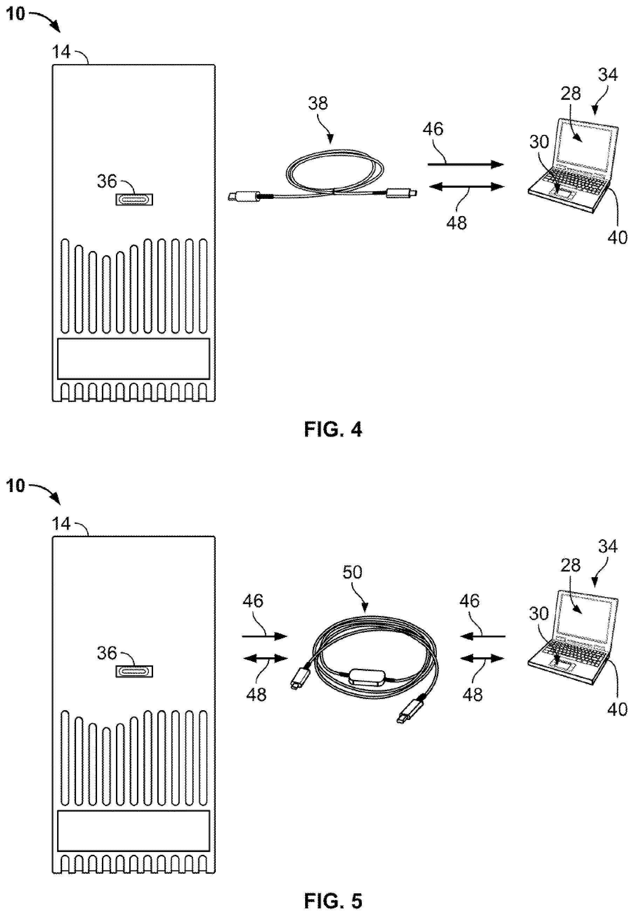

Furthermore, the motor drive 10 can be coupled to the external device 12, which can enable programming, monitoring, feedback, and/or control of the motor drive 10. According to some embodiments, the external device 12 can include a display 28, such as an LCD or other display device that may be used to provide feedback to the operator regarding the setting, performance or configuration of the motor drive 10. The external device 12 can also include an input structure 30, such as buttons, switches, touch pads, and/or a keypad, allowing input by a user. For example, the input structure 30 may be used to provide operator control of the motor drive 10. As further described below, the external device 12 may be a human interface module 32 (HIM, such as a remote user interface or handheld user interface), as shown in FIGS. 2 and 3, or a computer 34 (such as a personal computer, laptop, tablet, etc.), as shown in FIGS. 4 and 5.

Referring still to FIG. 1, the motor drive 10 can include a communications port 36 on the outer housing 14 that enables electronic communications between the motor drive 10 and the external device 12. For example, the external device 12 can be coupled to the communications port 36 via a connector 38 (e.g., a cable), as shown in FIG. 1, or directly coupled to the communications port 36, e.g., via a plug (not shown) on the external device 12. Generally, the communications port 36 can support high data communication rates, such as a rate greater than 500 kilobits per second (kbps), a rate from 500 kbps up to 480 megabits per second (Mbps), a rate greater than 480 Mbps, a rate from 500 kbps up to 5 gigabits per second (Gbps), or a rate from 500 kbps up to 10 Gbps. Furthermore, the communications port 36 can include dual-role power (DRP) features that support bi-directional power flow, therefore permitting the motor drive 10 to act as a source, providing power to the external device 12, or permitting the motor drive 10 to act as a sink, being powered by the external device 12, with the ability to alternate between the source and sink roles. Additionally, the communications port 36 can include dual-role data (DRD) features that support bi-directional data flow, acting as a downstream facing port (DFP), permitting the motor drive 10 to act as a host relative to the external device 12, or acting as an upstream facing port (UFP), permitting the motor drive 10 to act as a device relative to the external device 12 (e.g., an external host), with the ability to alternate between the DFP and UFP roles.

In some embodiments, the communications port 36 can be a USB port. The communications port 36 can thus provi de a standard connector with means to allow USB endpoints (e.g., the motor drive 10 and/or the external device 12) to detect and negotiate host/device behavior, as further described below. For example, the communications port 36 can be a USB Type-A port, a USB Type-B port (including a micro USB port or a mini USB port), or a USB Type-C port. Furthermore, in some embodiments, the communications port 36 can be a USB 3.1 dual-role port. For example, in one embodiment, the USB 3.1 standard can support data rates up to 10 Gbps, or data rates up to 480 Mbps. Accordingly, the USB port 36 can be used for data and power transfer between the motor drive 10 and the external device 12 when the motor drive 10 is coupled to the external device 12 via a direct connection, e.g., where the external device 12 includes a mating USB plug that can be plugged into the USB port 36. As another example, as shown in FIG. 1, the USB port 36 can be used for data and power transfer between the motor drive 10 and the external device 12 when the motor drive 10 is coupled to the external device 12 via a USB cable connection 38 between the USB port 36 and a corresponding USB port 40 on the external device 12.

In light of the above, FIGS. 2-5 illustrate various examples of the motor drive 10 coupled to external devices 12, according to some embodiments. More specifically, FIG. 2 illustrates a motor drive 10 directly connected to an HIM 32; FIG. 3 illustrates a motor drive 10 connected to an HIM 32 via a connector cable; FIG. 4 illustrates a motor drive 10 connected to a personal computer 34 via a connector cable; and FIG. 5 illustrates a motor drive 10 connected to a personal computer 34 via an isolating connector cable. It should be noted that any of the configurations illustrated in FIGS. 2-5, or any other configurations described herein comprising a motor drive 10 and an external device 12, may be generally referred to as a motor drive system.

Referring now to FIG. 2, an HIM 32 can be directly connected to the motor drive 10. For example, as described above, the motor drive 10 includes a USB port 36 on its outer housing 14. The HIM 32 can include a USB plug (not shown), for example along a rear side of its outer housing 42, of the same type as the USB port 36 on the motor drive 10, enabling a user to plug the HIM 32 into the motor drive 10 such that a USB cable is not required. In some embodiments, the motor drive 10 may also include a receptacle 44 to hold or support the HIM 32 when it is plugged into the USB port 36. With this configuration, the motor drive 10 sources power to the HIM 32 (as shown by arrow 46) when the motor drive 10 is powered, and data flow is bi-directional (as shown by arrow 48) controlled by the motor drive 10. More specifically, with this configuration, the motor drive 10 acts as the power source and the communications port 36 is a USB DFP, while the HIM 32 acts as the power sink and includes a USB UFP. The motor drive 10 may be powered to supply power to the HIM 32 using the external power source 20, shown in FIG. 1, which powers a DC power bus of the power module 16, or an auxiliary power supply (such as an auxiliary 24-volt power supply, not shown, that can be plugged into the motor drive 10).

Referring now to FIG. 3, an HIM 32 can be connected to the motor drive 10 via a connector cable 38, such as a USB cable, that plugs into the USB port 36 on the outer housing 14 of the motor drive 10 and into a corresponding USB port 40 on the HIM 32. Thus, the USB cable 38 can include USB plugs of a type that mates with the USB ports 36, 40 on the motor drive 10 and the HIM 32, respectively. In some embodiments, the USB cable 38 is a USB Type-C cable. However, in other embodiments, the USB cable 38 can include different respective USB plugs for the motor drive 10 and/or the HIM 32. For example, USB 3.1 is backward compatible with previous USB speeds (such as USB 2.0). Thus, while the motor drive 10 may include a USB 3.1 Type-C port 36, it may still be compatible with a HIM 32 including a USB 2.0 port 40 or other older USB ports. With this configuration, the motor drive 10 sources power to the HIM 32 (as shown by arrow 46) when the motor drive 10 is powered, and data flow is bi-directional (as shown by arrow 48) controlled by the motor drive 10. More specifically, with this configuration, the motor drive 10 acts as the power source and the communications port 36 is a USB DFP, while the HIM 32 acts as the power sink and includes a USB UFP. The motor drive 10 may be powered to supply power to the HIM 32 using the external power source 20, shown in FIG. 1, which powers a DC power bus of the power module, or an auxiliary power supply.

Referring now to FIG. 4, a computer 34 can be connected to the motor drive 10 via a connector cable 38, such as a USB cable, that plugs into the USB port 36 on the outer housing 14 of the motor drive 10 and into a corresponding USB port 40 on the computer 34. Thus, the USB cable 38 can include USB plugs of a type that mates with the USB ports 36, 40 on the motor drive 10 and the computer 34, respectively. In some embodiments, the USB cable 36 is a USB Type-C cable. However, in other embodiments, the USB cable 36 can include different USB plugs, as discussed above. With this configuration, the computer 34 sources power to the motor drive 10 (as shown by arrow 46), and data flow is bi-directional (as shown by arrow 48), controlled by the computer 34. More specifically, with this configuration, the motor drive 10 acts as the power sink and the communications port 36 is a USB UFP, while the computer 34 acts as the power source and includes a USB DFP. Accordingly, the computer 34 provides power to the motor drive 10, or at least to the control module 16, to enable "mains-free programming," which may be considered programming of the motor drive 10 when power is not provided to the motor drive 10 (e.g., via the power source 20 of FIG. 1 or an auxiliary power source). That is, the motor drive 10 may not be able to power a motor 22 if the motor drive 10 is not receiving power from the power source 20 (or an auxiliary power source), but can still be powered by the computer 34 at least for programming, monitoring, feedback, and/or control.

Thus, generally, the motor drive 10 may power a motor 22 when the computer 34 is coupled to the motor drive 10 for programming, monitoring, feedback, and/or control. However, the power module 16 need not be physically separated from the control module 16 to perform such programming, monitoring, feedback, and/or control. For example, in some embodiments, power may still be provided to the motor drive 10 via the power source 20 to run a connected motor 22 when the computer 34 is coupled to the motor drive 10. Furthermore, as further described below, in some embodiments, USB communication between the motor drive 10 and the computer 34 may be disabled when power to the motor drive 10 (e.g., via the power source) is detected.

Referring now to FIG. 5, a computer 34 can be connected to the motor drive 10 via an isolating connector cable 50, such as a USB isolating cable, that plugs into the USB port 36 on the outer housing 14 of the motor drive 10 and into a corresponding USB port 40 on the computer 34. Thus, the USB isolating cable 50 can include USB plugs of a type that mates with the USB ports on the motor drive 10 and the computer 34, respectively. In some embodiments, the USB isolating cable 50 is a USB Type-C isolating cable. However, in other embodiments, the USB isolating cable 50 can include different USB plugs. Generally, the isolating cable 50 can provide high-voltage isolation between two connected devices. Thus, with this configuration, the motor drive 10 and the computer 34 can each power their respective side of the isolating cable 50 (as shown by arrows 46), and data flow is bi-directional (as shown by arrows 48), controlled by the computer 34. More specifically, with this configuration, the motor drive 10 acts as a power source and the communications port 36 can be a USB UFP, while the computer 34 also acts as a power source and includes a USB DFP. Accordingly, power may still be provided to the motor drive 10 when the computer 34 is coupled to the motor drive 10 (e.g., via the power source of FIG. 1 or an auxiliary power source). Additionally, in some embodiments, this configuration can include a first USB cable 38 connected from the motor drive 10 to a separate USB isolator device (not shown) and a second USB cable 38 connected from the USB isolator device to the computer 34.

In some embodiments, the communications port 36 on the motor drive 10 can be coupled to other USB devices. For example, in one embodiment, the communications port 36 can be connected to a wireless USB dongle (not shown), which may be wirelessly connected to an external device 12. Accordingly, the USB dongle can act as a connector between the motor drive 10 and the external device 12. With this configuration, the motor drive 10 and the external device 12 are each respectively powered, and data flow is bi-directional, controlled by the motor drive 10 or the external device 12. As a result, the motor drive 10 and the external device 12 can communicate wirelessly, such as for wireless programming, monitoring, feedback, and/or control.

In light of these above examples, power direction and data control between the motor drive 10 and the external device 12 can be dependent on the type of external device 12. Thus, generally, the motor drive 10 can power the external device 12 when the external device is of a first type and the motor drive 10 receives power from the external device 12 when the external device 12 is of a second type. Additionally, the motor drive 10 can control data transmission to the external device 12 when the external device 12 is of a first type and the motor drive 10 can allow the external device 12 to control data transmission when the external device 12 is of a second type. It should also be noted that power delivery and control of data flow can be independent. As a result, in some embodiments, the following power and data flow configurations can be achieved: (1) the motor drive 10 can supply power and control data flow; (2) the motor drive 10 can receive power and control data flow; (3) the external device can supply power and control data flow; and/or (4) the external device can receive power and control data flow.

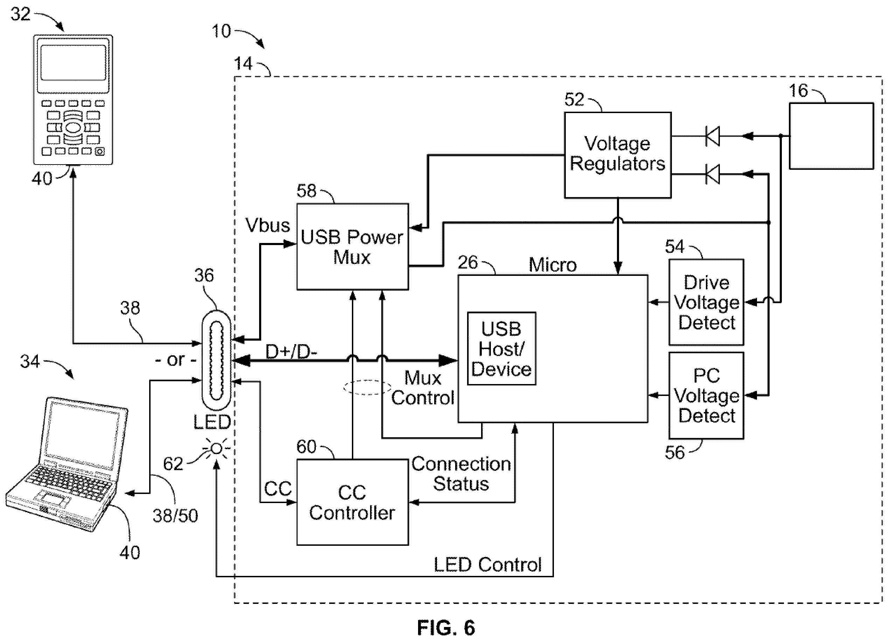

Accordingly, as described above, in some embodiments, the motor drive 10 includes a USB 3.1 dual-role communications port 36 on its outer housing 14 for connection to an external device 12. For example, FIG. 6 illustrates a block diagram of control circuitry of the motor drive 10 and the communications port 36, according to some embodiments. Such control circuitry can be part of the control module 18, in some embodiments. As shown in FIG. 6, the control circuitry can include the microprocessor 26, voltage regulators 52, a drive voltage detection circuit 54, a computer voltage detection circuit 56, a USB power multiplexor 58, and a configuration channel (CC) logic controller 60.

Still referring to FIG. 6, the USB power multiplexor 58 can provide control over sourcing power to or receiving power from the external device 12. The CC logic controller 60 can manage monitoring and negotiation of connections with the external device 12. The CC logic controller 60 can also provide partial control of the USB power multiplexor 58 to enable drive power-up for mains-free programming. The voltage regulators 52 can be used for logic and communications functions of the motor drive 10 and can be supplied by external power from the external device 12 and power from the power module 16 of the motor drive 10. The microprocessor 26 can, among other things, monitor a connection status of potential power sources, via the drive voltage detection circuit 54 and the computer voltage detection circuit 56, transmit and receive data with the USB-connected external device 12, control the USB power multiplexor 58, communicate with the CC controller 60, e.g., to receive connection status, and provide indicator control, for example, to an indicator 62 (such as a light-emitting diode, LED) on the outer housing 14, as further described below.

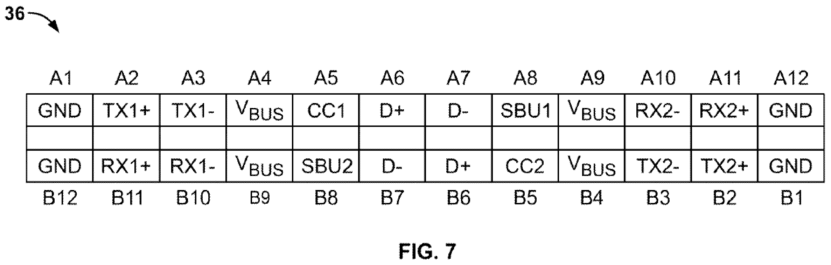

Additionally, FIG. 7 is a schematic illustration of connector pins of a USB 3.1 connection port 36 according to some embodiments. With reference to FIGS. 6 and 7, D+ and D-pins can be used for data transmission, connected to the microprocessor 26. VBUS and GND pins can be used for power delivery, where VBUS pins (e.g., cable bus power) are connected to the USB power multiplexor 58. CC1 and CC2 pins can be used for connection and orientation detection, connected to the CC controller 60. That is, the CC pins can be monitored to determine what is connected to the communications port 36, e.g., based on pull-up resistors (indicating a USB host or DFP), pull-down resistors (indicating a USB device or UFP) on the CC pins, or an ability to configure either pull-up or pull-down (indicating a dual-role data (DRD) device). As such, changes in data or power delivery roles can be communicated over the CC line.

It should be noted that, while USB 3.1 Type-C connections are shown and described above with respect to the motor drive communications port 36, certain features may be utilized with older USB versions. Furthermore, as noted above, the external device 12 may include a different USB type port 36. In such cases, data speeds may be governed by the older USB type port and connector cable 38. For example, USB 3.1 is backward compatible with previous USB speeds, such as USB 2.0 speeds (e.g., up to 480 Mbps), via the D+/D- data lines. Furthermore, while single communications ports are shown and described herein, in some embodiments, the motor drive 10 may include multiple USB ports 36 and/or the HIM 32 and/or the computer 34 may include multiple USB ports 40 (e.g., to connect to multiple motor drives 10). For example, in one embodiment, the motor drive 10 may include multiple USB ports 36 and, as a result, maybe connected to an HIM 32 and a personal computer 34 simultaneously.

Accordingly, via the control circuitry and physical cable interconnection logic, the motor drive 10 is able to determine what type of external device 12 is connected so that it may operate as a power source or power sink, or UFP or DFP, as described above. For example, as described above, the motor drive 10 can monitor USB connection status, e.g., via the CC controller 60, and the motor drive 10 can monitor its DC bus to determine power supply status, e.g., via the voltage detection circuits, as further described below. In some embodiments, common mode noise is generated by a motor drive 10 powering (e.g., running or operating) a motor 22. Such common mode noise can interfere with proper operation of connected chassis-grounded external devices 12, such as a computer 34 (though, generally, such noise may not cause safety issues as the control module 18 of the motor drive 10 may also be chassis grounded to earth ground). As a result, in some embodiments, the motor drive 10 may be further programmed to take actions when a computer 34 is connected to the communications port 36 and the motor drive 10 is operating. According to the invention, one action is to inhibit motor start until the computer 34 is disconnected from the communications port 36. As another example, one action may be to inhibit USB communication when a computer 34 is connected to the communications port 36 while the motor drive 10 is already running. As yet another example, one action may be to provide an alert when a computer 34 is connected to the communications port 36 while the motor drive 10 is already running, or when a computer 34 is connected to the communications port 36 and the motor drive 10 is instructed to start the motor 22. Such alerts may be a visual warning message or audio warning through a user interface on the motor drive 10 (e.g., the motor drive 10 may include an embedded HIM with a display 28 and/or speaker), a visual warning through an LED 62 located on the outer housing 14, such as by the communications port 36, on the user interface, or at another location on the housing 14, and/or a warning through the display 28 of the computer 34.

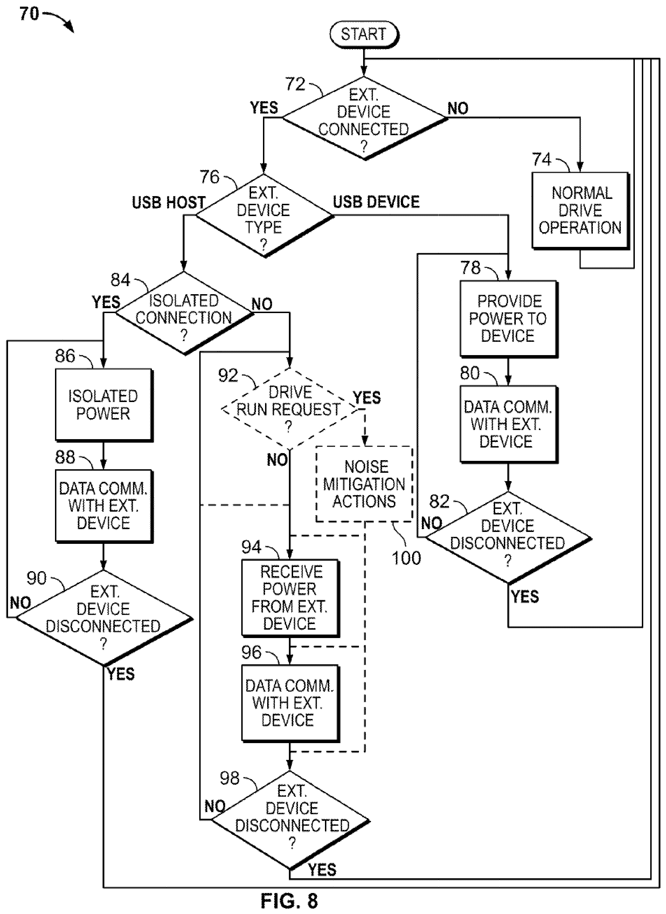

In light of the above, FIG. 8 illustrates a method 70 according to some embodiments. Generally, one or more steps of the method 70 can be executed by the motor drive 10 or, more specifically, the control module 18 or, more specifically, the microprocessor 26. Thus, any of the steps described herein may be considered to be carried out by the motor drive 10, the control module 18, and/or the microprocessor 26. For example, one or more steps of the method 70 may be part of a program stored in memory 24 and executed by the microprocessor 26. Additionally, while the steps of the method 70 are shown in a particular order, in some embodiments, the method 70 may not include all steps shown, may include additional steps, or may include the steps in a different order.

Referring still to FIG. 8, generally, at step 72 the motor drive 10 can determine whether an external device is connected. If not, at step 74, normal drive operation can be enabled and the method returns to step 72. If, at step 72, an external device connection is detected, the USB-connected device type can be determined at step 76. The external device type can be a USB host, such as a computer 34 or a USB device, such as an HIM 32, a wireless dongle, etc.

If, at step 76, a USB device is detected, the motor drive 10 can act as a host with a DFP. Accordingly, at step 78, power can be provided from the motor drive 10 to the USB device. By determining external device connection prior to enabling USB bus power to the external device 12, the motor drive 10 (via the USB 3.1 port 36) can help prevent short circuits from occurring, for example, if two hosts were connected. At step 80, the motor drive 10 and the USB device can communicate, with data communication controlled by the motor drive 10. Power and/or data communication between the motor drive 10 and the USB device can continue until the USB device is disconnected, as determined at step 82. When the USB device is disconnected, the motor drive 10 returns to step 72 to again look for an external device connection.

If, at step 76, a USB host is detected, the motor drive can act as a device with a UFP. Accordingly, at step 84, the connection type may be determined. If, at step 84, the USB host is connected to the motor drive 10 via an isolated connection, then isolated power is provided by both the motor drive 10 and the USB host at step 86. At step 88, the motor drive 10 and the USB host can communicate, with data communication controlled by the USB host. Power and/or data communication between the motor drive 10 and the USB host can continue until the USB host is disconnected, as determined at step 90. When the USB host is disconnected, the motor drive 10 returns to step 72 to again look for an external device connection.

If, at step 84, the USB host is connected to the motor drive 10 without an isolated connection, motor drive power supply status is determined at step 92. That is, at step 92, the microprocessor 26 can determine whether the motor drive 10 is running a connected motor 22 or received instruction to start running a connected motor 22. If the motor 22 is not running and no motor start instruction is received, as determined at step 92, power is provided from the USB host to the motor drive at step 94. At step 96, the motor drive 10 and the USB host can communicate, with data communication controlled by the USB host Power and/or data communication between the motor drive 10 and the USB host can continue until the USB host is disconnected, as determined at step 98. When the USB host is disconnected, the motor drive 10 returns to step 72 to again look for an external device connection.

Thus, if the USB host remains connected, the motor drive 10 can return to step 94, or return to step 92. If, at step 92 (e.g., following step 84 or step 98), the motor 22 is running or a motor start instruction is received, common mode noise mitigation actions are be taken at step 100. In some embodiments, such actions at step 100 may include inhibiting power and/or data communication between the motor drive 10 and the USB host, such that steps 94 and/or 96 are skipped. According to the invention, such actions at step 100 includes inhibiting the motor 22 from being started, such that power and/or data communication between the motor drive 10 and the USB host at step 94 and 96, respectively, are still enabled. Additionally, in some embodiments, such actions at step 100 may include providing an alert or warning only (e.g., via a display or LED indicator), such that power and/or data communication between the motor drive 10 and the USB host at step 94 and 96, respectively, are still enabled. Accordingly, in such embodiments, the motor drive 10 may be able to run while the USB host is connected and communicating with the motor drive 10, but a user may be alerted and, for example, encouraged to disconnect the USB host from the motor drive 10 during motor operation.

Additionally or alternatively, in some embodiments, at step 92, motor drive power supply status can be determined by sensing a DC bus line of the motor drive 10. The DC bus in the motor drive 10 can be monitored to determine whether an isolated connection is necessary to the USB host. For example, if DC bus is present, isolation may be required to the USB host and, if isolation is not present, firmware algorithms in the motor drive 10 can prohibit any motor operations from any source. If DC bus is not present, USB power from the USB host can be used to operate various low voltage parts of the motor drive 10 including, but not limited to, processors to flash the drive 10 or to read/write the configurations of the drive 10 (e.g., at steps 94 and 96).

In light of the above, some embodiments provide a motor drive comprising USB dual-role data and/or dual-role power, with a common port for connections to external devices including USB devices (e.g., a USB HIM, a USB wireless dongle, etc.) and USB hosts (e.g., a personal computer, a laptop, a tablet, etc.). Through this common port, the USB devices may be powered by the drive, while the USB hosts may provide power to the drive (e.g., for mains-free programming). In some embodiments, the motor drive can detect situations in which common mode noise may interfere with operations of the attached external devices and take mitigation actions to prevent that interference. Additionally, the common USB port can provide high data communication rates. Such high data communication rates can be advantageous, for example, to reduce time required for motor drive firmware and configuration updates as well as to enable HIM features such as, but not limited to, wireless access via Bluetooth or WiFi, high-speed data transfers, and/or graphical trending. Furthermore, while the features and advantages of a dual-role USB port for programming a motor drive via an HIM or personal computer are described and illustrated herein, such features and advantages can also be applied to other components of industrial control systems such as, but not limited to, motor control centers, soft starters, or smart breakers.

## Claims

1. A method performed by a motor drive (10) of operating the motor drive, the method comprising:
determining (76) a USB host is connected to the motor drive via a USB port (36) on the motor drive;
enabling (94) the USB host to provide power to the motor drive when the USB host is connected to the motor drive; and
taking (100) a common mode noise mitigation action when a motor connected to the motor drive is to be run,
wherein taking the common mode noise mitigation action includes preventing the motor from starting until the USB host is disconnected from the motor drive.

2. The method of claim 1, wherein taking the common mode noise mitigation action includes preventing data communication between the USB host and the motor drive.

3. The method of one of claims 1 to 2, wherein the USB port is a USB 3.1, Type-C port.

4. The method of one of claims 1 to 3, wherein the USB host is chosen from a personal computer, a tablet, and a laptop.

5. The method of one of claims 1 to 4, wherein the USB port supports dual-role power flow.

6. The method of one of claims 1 to 5, wherein the USB port supports dual-role data flow.

7. A motor drive (10) configured to be connected to a USB host, the motor drive comprising:
an outer housing (14);
a power module (16) housed within the outer housing;
a control module (18) housed within the outer housing and in communication with the power module; and
a USB port (36) disposed on the outer housing and in communication with the control module,
wherein the motor drive is configured to:
determine (76) that the USB host is connected to the motor drive via the USB port;
enable (94) the USB host to provide power to the motor drive when the USB host is connected to the motor drive; and
take (100) a common mode noise mitigation action when a motor connected to the motor drive is to be run, wherein taking the common mode noise mitigation action includes preventing the motor from starting until the USB host is disconnected from the motor drive.

8. The motor drive of claim 7, wherein taking the common mode noise mitigation action includes preventing data communication between the USB host and the motor drive.

9. The motor drive of one of claims 7 to 8, wherein the USB port is a USB 3.1, Type-C port.

10. The motor drive of one of claims 7 to 9, wherein the USB host is chosen from a personal computer, a tablet, and a laptop.

11. The motor drive of one of claims 7 to 10, wherein the USB port supports dual-role power flow.

12. The motor drive of one of claims 7 to 11, wherein the USB port supports dual-role data flow.

## Patentansprüche

1. Verfahren, das von einem Motorantrieb (10) zum Betreiben des Motorantriebs durchgeführt wird, wobei das Verfahren umfasst:
Bestimmen (76), ob ein USB-Host über einen USB-Port (36) am Motorantrieb mit dem Motorantrieb verbunden ist;
Aktivieren (94) des USB-Hosts, um den Motorantrieb mit Strom zu versorgen, wenn der USB-Host mit dem Motorantrieb verbunden ist; und
Durchführen (100) einer Maßnahme zur Unterdrückung von Gleichtaktstörungen, wenn ein mit dem Motorantrieb verbundener Motor betrieben werden soll,
wobei das Durchführen der Maßnahme zur Unterdrückung von Gleichtaktstörungen das Verhindern des Startens des Motors umfasst, bis der USB-Host vom Motorantrieb getrennt ist.

2. Verfahren nach Anspruch 1, wobei das Durchführen der Maßnahme zur Unterdrückung von Gleichtaktstörungen das Verhindern der Datenkommunikation zwischen dem USB-Host und dem Motorantrieb umfasst.

3. Verfahren nach einem der Ansprüche 1 bis 2, wobei der USB-Anschluss ein USB 3.1-Anschluss vom Typ C ist.

4. Verfahren nach einem der Ansprüche 1 bis 3, wobei der USB-Host aus einem Personalcomputer, einem Tablet und einem Laptop ausgewählt ist.

5. Verfahren nach einem der Ansprüche 1 bis 4, wobei der USB-Anschluss einen Stromfluss mit doppelter Funktion unterstützt.

6. Verfahren nach einem der Ansprüche 1 bis 5, wobei der USB-Anschluss einen Datenfluss mit doppelter Funktion unterstützt.

7. Motorantrieb (10), der zum Anschluss an einen USB-Host konfiguriert ist, wobei der Motorantrieb aufweist:
ein äußeres Gehäuse (14);
ein Stromversorgungsmodul (16), das in dem äußeren Gehäuse untergebracht ist;
ein Steuermodul (18), das in dem äußeren Gehäuse untergebracht ist und mit dem Stromversorgungsmodul in Verbindung steht; und
einen USB-Anschluss (36), der an dem äußeren Gehäuse angeordnet ist und mit dem Steuermodul in Verbindung steht,
wobei der Motorantrieb konfiguriert ist, um
festzustellen (76), dass der USB-Host über den USB-Anschluss mit dem Motorantrieb verbunden ist;
den USB-Host zu aktivieren (94), um den Motorantrieb mit Strom zu versorgen, wenn der USB-Host mit dem Motorantrieb verbunden ist; und
eine Maßnahme zur Unterdrückung von Gleichtaktstörungen zu ergreifen (100), wenn ein mit dem Motorantrieb verbundener Motor betrieben werden soll, wobei das Ergreifen der Maßnahme zur Unterdrückung von Gleichtaktstörungen das Verhindern des Starts des Motors umfasst, bis der USB-Host vom Motorantrieb getrennt ist.

8. Motorantrieb nach Anspruch 7, wobei das Ergreifen der Maßnahme zur Unterdrückung von Gleichtaktstörungen das Verhindern der Datenkommunikation zwischen dem USB-Host und dem Motorantrieb umfasst.

9. Motorantrieb nach einem der Ansprüche 7 bis 8, wobei der USB-Anschluss ein USB 3.1-Anschluss vom Typ C ist.

10. Motorantrieb nach einem der Ansprüche 7 bis 9, wobei der USB-Host aus einem Personalcomputer, einem Tablet und einem Laptop ausgewählt ist.

11. Motorantrieb nach einem der Ansprüche 7 bis 10, wobei der USB-Anschluss einen Stromfluss mit doppelter Funktion unterstützt.

12. Motorantrieb nach einem der Ansprüche 7 bis 11, wobei der USB-Anschluss einen Datenfluss mit doppelter Funktion unterstützt.

## Revendications

1. Procédé effectué par un entraînement moteur (10) pour faire fonctionner l'entraînement moteur, le procédé comprenant les étapes consistant à :
déterminer (76) qu'un hôte USB est connecté à l'entraînement moteur via un port USB (36) sur l'entraînement moteur ;
permettre (94) à l'hôte USB de fournir de la puissance à l'entraînement moteur lorsque l'hôte USB est connecté à l'entraînement moteur ; et
mettre en œuvre (100) une action d'atténuation de bruit en mode commun lorsqu'un moteur connecté à l'entraînement moteur doit être mis en marche,
dans lequel la mise en œuvre de l'action d'atténuation de bruit en mode commun comprend la prévention du démarrage du moteur jusqu'à ce que l'hôte USB soit déconnecté de l'entraînement moteur.

2. Procédé selon la revendication 1, dans lequel la mise en œuvre de l'action d'atténuation de bruit en mode commun comprend la prévention d'une communication de données entre l'hôte USB et l'entraînement moteur.

3. Procédé selon l'une des revendications 1 à 2, dans lequel le port USB est un port USB 3.1, de type C.

4. Procédé selon l'une des revendications 1 à 3, dans lequel l'hôte USB est choisi parmi un ordinateur personnel, une tablette, et un ordinateur portable.

5. Procédé selon l'une des revendications 1 à 4, dans lequel le port USB prend en charge un flux de puissance à double fonction.

6. Procédé selon l'une des revendications 1 à 5, dans lequel le port USB prend en charge un flux de données à double fonction.

7. Entraînement moteur (10) configuré pour être connecté à un hôte USB, l'entraînement moteur comprenant :
un boîtier extérieur (14) ;
un module de puissance (16) logé à l'intérieur du boîtier extérieur ;
un module de commande (18) logé à l'intérieur du boîtier extérieur et en communication avec le module de puissance ; et
un port USB (36) disposé sur le boîtier extérieur et en communication avec le module de commande,
dans lequel l'entraînement moteur est configuré pour :
déterminer (76) que l'hôte USB est connecté à l'entraînement moteur via le port USB ;
permettre (94) à l'hôte USB de fournir de la puissance à l'entraînement moteur lorsque l'hôte USB est connecté à l'entraînement moteur ; et
mettre en œuvre (100) une action d'atténuation de bruit en mode commun lorsqu'un moteur connecté à l'entraînement moteur doit être mis en marche, dans lequel la mise en œuvre de l'action d'atténuation de bruit en mode commun comprend la prévention du démarrage du moteur jusqu'à ce que l'hôte USB soit déconnecté de l'entraînement moteur.

8. Entraînement moteur selon la revendication 7, dans lequel la mise en œuvre de l'action d'atténuation de bruit en mode commun comprend la prévention d'une communication de données entre l'hôte USB et l'entraînement de moteur.

9. Entraînement moteur selon l'une des revendications 7 à 8, dans lequel le port USB est un port USB 3.1, de type C.

10. Entraînement moteur selon l'une des revendications 7 à 9, dans lequel l'hôte USB est choisi parmi un ordinateur personnel, une tablette, et un ordinateur portable.

11. Entraînement moteur selon l'une des revendications 7 à 10, dans lequel le port USB prend en charge un flux de puissance à double fonction.

12. Entraînement moteur selon l'une des revendications 7 à 11, dans lequel le port USB prend en charge un flux de données à double fonction.
